# EUROPEAN PATENT APPLICATION

(11) **EP 4 769 233 A1**
(43) Date of publication of application: **01.07.2026**
(21) Application number: 24383489.2
(22) Date of filing: 31.12.2024
(51) Int. Cl.: G06N 3/082, G06N 3/045

(54) **DATA MODIFICATION IN AN ARTIFICIAL INTELLIGENCE SYSTEM**

(71) Applicant: Multiverse Computing S.L., 20014 Donostia / San Sebastián (ES)
(72) Inventor: KURT, Uygar, 20014 Donostia - San Sebastian (ES); JAHROMI, Saeed, 20014 Donostia - San Sebastian (ES); ORUS, Roman, 20014 Donostia - San Sebastian (ES)
(74) Representative: Elion IP, S.L.

(57) **Abstract**

A method comprising: processing an instruction to modify a trained artificial intelligence, AI, system, the AI system being configured to provide at least one output based on an input dataset, the trained AI system having the form of a tensor network, the instruction comprising adding a first dataset in the AI system and/or removing a second dataset from the AI system; and running the instruction on the trained AI system, which comprises: when the instruction at least comprises adding the first dataset, encoding data values of the first dataset in one or more tensors of the trained AI system associated with values of the first dataset; and when the instruction at least comprises removing the second dataset, setting to zero values associated with data values or relationships of the second dataset in one or more tensors of the trained AI system associated with values of the second dataset, or removing the one or more tensors associated with values of the second dataset from the AI system. Also, an apparatus, a system and a computer program associated with the method.

## Description

### TECHNICAL FIELD

The present disclosure relates to the field of artificial intelligence (Al) systems. More particularly, the present disclosure relates to methods, devices and systems for making data or information changes in an AI system, such as, for example, a large language model (LLM).

### BACKGROUND

AI has become an integral part of many devices and systems and used in many applications, powering everything from search engines to self-driving cars, providing a way of processing Big Data to produce relevant outputs, such as instructions and information. AI systems, such as neural networks and large language models, are trained on massive datasets to learn patterns and make predictions. However, the complex nature of these systems presents unique challenges when it comes to modifying specific information, either by adding, replacing or removing such information.

The design of AI systems makes them opaque in the sense that configuration thereof and information distributed across the network in the AI systems is difficult to understand or manipulate. This makes pinpointing and modifying specific pieces of data challenging, and even more so when the pieces of data are interconnected with a larger number of pieces of data in the system. On top of that, any attempt to modify the AI system must be done carefully to avoid compromising its performance or introducing biases, the quality of the AI system potentially dropping otherwise.

The need to modify AI systems arises from various reasons. Outdated or non-usable data, due to different factors, should be removed from the AI systems to avoid using that data in future outputs. As the system or application at hand evolves over time with new or fresher data becomes available, AI systems may need to be updated with new data to remain relevant and effective.

Data modification in some existing AI system requires extensive retraining of the AI system after conducting the data modification, and/or make complex adjustments to the inner workings of the AI system, both of which are time-consuming and resource intensive.

An efficient and effective way of modifying an AI system when outdated data is present and/or more recent data is available would be convenient.

### DESCRIPTION

A first aspect relates to a method. The method comprises processing an instruction to modify a trained artificial intelligence, Al, system, the AI system being configured to provide at least one output based on an input dataset. The trained AI system has the form of a tensor network. The instruction comprises adding a first dataset in the AI system and/or removing a second dataset from the AI system. The method may further comprise running the instruction on the trained AI system.

The method allows to to introduce and/or delete specific data or information within the AI system in an effective manner. As the AI system is a tensor network-based AI system, which for an AI system is convenient due to the capabilities of tensor networks to represent large-scale data with a limited number of parameters, the tensors within the tensor network need to be modified. Each tensor represents a multidimensional array that encodes relationships between different pieces of data and learned representations. The tensors are interconnected forming the tensor network. And the knowledge of the AI system (such as, for example but without limitation, facts, rules, etc.) is stored in the tensors and interconnections thereof that relate the different pieces of data and representations.

When the instruction at least comprises adding the first dataset, running the instruction comprises encoding data values of the first dataset in one or more tensors of the trained AI system associated with values of the first dataset.

Upon running the instruction, new data or information gets introduced in the AI system for incorporation of such knowledge in the outputs subsequently provided by the AI system when using it, and thus for incorporation of such knowledge in decision-making processes. Accordingly, the AI system features new sources of data for influencing the outputs the Ai system provides, thereby improving the accuracy of the AI system.

By encoding the new data values, the modified tensor components in the tensor network will represent new information with efficient and memory-optimized additions of data whenever needed. The modification of specific tensors enables the AI system to assimilate the new data and, thus, knowledge, without the need for retraining the AI system, or at least without the need for retraining the entire AI system. The present method provides localized updates in the tensor networks by modifying the one or more specific tensors without having to reconfigure the whole AI system.

When the instruction at least comprises removing the second dataset, running the instruction comprises setting to zero values associated with data values or relationships of the second dataset in one or more tensors of the trained AI system associated with values of the second dataset, or removing the one or more tensors associated with values of the second dataset from the AI system.

Upon running the instruction, existing data or information gets removed from or discarded in the AI system for making obsolete such knowledge from the outputs subsequently provided by the AI system when using it, and thus for removal of such knowledge in decision-making processes. Accordingly, the AI system stops featuring data to be deprecated for not influencing the outputs the Ai system provides, thereby improving the accuracy of the AI system.

The zeroing of encoded values in the tensors or the removal of the tensors is performed to make the AI system forget or deprioritize particular data or knowledge. This implementation also adjusts relationships between the different values of data so that the AI system reduces or removes the influence of the data being object of removal.

In some embodiments, the method is a computer-implemented method.

The method runs in one or more processing devices, in an isolated manner and/or in a distributed manner. That is to say, one, some or all steps may be run by a same processing apparatus, or one or some steps may be run by one processing apparatus and some other step or steps may be run by one or more other processing apparatuses or even be run in distributed manner, which means that several processing apparatuses cooperate to run one or more steps. In this sense, the steps are digitally run. For example, but without limitation, a processing apparatus is or comprises at least one central processing unit, graphics processing unit, mobile phone, tablet, personal computer, server, field-programmable gate array, and/or application specific integrated circuit, etc. When multiple processing apparatuses are used for running the method, the processing apparatuses may be of the same type, e.g., several servers, or one or some processing apparatuses may be of a different type, e.g., personal computers and servers.

In some embodiments, the step of encoding of the data values of the first dataset comprises: identifying tensors in the AI system encoding one or more data values of the first dataset and/or encoding one or more relationships between the one or more data values; deriving a representation in the form of numerical values for the first dataset; and encoding the derived numerical values in the identified tensors.

As different tensors correspond to different parts of the learned representations (e.g., embeddings, token relations, structures, etc.) of the AI system, the associated tensor or tensors are identified based on the first dataset. To this end, data values associated with values of the first dataset may first be determined according to a predetermined model. The predetermined model provides data values that are related in some way, as defined in the predetermined model, to the data values in the first dataset. For example, the provided data values may relate to a same concept or be part of a same cluster of data or information as the data values of the first dataset. By way of example, if the first dataset includes computer vision data of obstacles detectable by a vehicle, the provided data values relate to computer vision data of same or other obstacles, or computer vision data of boundaries of a path through which a vehicle may move.

The data values of the first dataset or the provided data values, if any, are used to identify the specific tensor or tensors for addition of data. Tensors of order higher than that of the tensors first located as relating to the data values may also be identified since such higher-order tensors represent relationships between the tokens and they may also have data values encoded therein. By way of example, tensors representing tokens about laser measurements of obstacles and tokens about digital images may be identified, and the tensors encoding relationships between such tokens may also be identified.

Depending on the type of data in the first dataset, which could be factual or relational, for example, tensors or values thereof of one type or another will have to be identified, thus direct tensors or relational tensors. By the same token, the encoded data value will also be dependable on the type of data to be introduced in the AI system, since the encoded data value will establish the factual or relational piece of data introduced. A numerical version of the data values to be encoded is obtained for encoding in the tensor or tensors.

After identification of the one or more tensors, specific values, e.g., numerical values, in the tensor(s) are modified to influence the outputs of the AI system with the new knowledge. Such modifications are highly localized, thereby introducing new data in the AI system without impacting the entirety of the AI system. This makes tensor modification particularly efficient for updating an AI system with domain-specific knowledge.

In some embodiments, the step of running of the instruction on the trained AI system comprises, when the instruction at least comprises adding the first dataset and after the step of encoding of the data values, modifying, in one or more tensors in the trained AI system, encoded relationship values between the data values encoded in the one or more tensors based on the data values of the first dataset added in the trained AI system.

As aforesaid, the addition of data may be factual or relational, therefore the tokens modified may be of both types to influence the outputs provided by the AI system in both ways. For relational data introduction, typically the identified higher-order tensors may be the ones to have new data values encoded therein.

In some embodiments, the step of running of the instruction on the trained AI system comprises, when the instruction at least comprises adding the first dataset and after the step of encoding of the data values: comparing a size of the encoded data values of the first dataset in the one or more tensors with a size of data values encoded in tensors of the trained AI system not encoded in the encoding step, and rescaling the encoded data values of the first dataset in the one or more tensors when the comparison of sizes exceeds a predetermined size threshold. Additionally or alternatively, the running of the instruction on the trained AI system comprises applying a normalization on encoded data values in tensors of the trained AI system for balancing encoded data values across the trained AI system.

The behavior of the AI system may be impacted or even disrupted in cases in which the new data values are too large or too small compared to other data values of tensors in AI system. Therefore, to provide the AI system with more accurate outputs, once the new data values have been encoded in the tensor or tensors, rescaling or normalizing tensor values may be conducted to ensure consistency with the rest of the AI system. A technique such as, for example, L2 normalization and/or gradient-based optimization may be used to balance values across the tensor network so that the new data values do not dominate or conflict with the prior understanding of the AI system.

In some embodiments, the step of running of the instruction on the trained AI system comprises, when the instruction at least comprises adding the first dataset and after the step of encoding of the data values, applying tensor contraction to the trained AI system for establishing relationships between encoded data values across the trained AI system.

Conducting tensor contraction, which is the process of multiplying tensors and summing them along specific dimensions to propagate information through the AI system, may improve the accuracy of the AI system. The tensor contraction changes how the different tokens relate to one another, thereby influencing the outputs.

Particularly, depending on the structure of the tensor network and the nature of the modification, updating the structure of the AI system with the existing and the new data will yield a greater or smaller improvement on the accuracy of the outputs provided.

In some embodiments, the step of running of the instruction on the trained AI system comprises, when the instruction at least comprises adding the first dataset and after the step of encoding of the data values, obtaining one or more outputs from the trained AI system based on one or more inputted input datasets, the inputted input datasets being associated with the data values of the first dataset; and assessing accuracy of the trained AI system for providing outputs associated with the data values of the first dataset based on the obtained one or more outputs.

After running the instruction to at least add the data in the first dataset, and prior to using the AI system for controlling a device, system or process with it, or provide data for decision-making purposes, validation of the resulting AI system may be conducted. The AI system is tested by way of input datasets that relate to the values newly introduced, for example the input dataset or datasets may be configured to make the outputs largely influenced by the newly introduced values. Depending on the obtained outputs, the accuracy of the AI system is assessed for validation thereof.

When the attained accuracy does not fulfill a predetermined criterion, values encoded in the identified one or more tensors may be fine-tuned based on the first dataset and/or the input datasets to increase the influence of the newly introduced data on the resulting outputs.

In some embodiments, the step of setting to zero values or removing the one or more tensors comprises: identifying tensors in the AI system encoding one or more data values of the second dataset and/or encoding one or more relationships between the one or more data values; and setting to zero values associated with the data values or relationships of the second dataset in the identified tensors, or removing the identified tensors from the AI system.

Tensors associated with the second dataset are identified. Like with the addition of data, data values associated with values of the second dataset may be determined according to a predetermined model, however in removal of data such obtention of data values is less preferred as it may cause wrong removal of data. The data values of the second dataset are the basis for identifying the specific tensor or tensors encoding data values that need to be discarded in some manner. Higher-order tensors, as explained with reference to the addition of data, may also be identified for zeroing values and reducing or removing the influence of data to be removed according to the second dataset.

The identified tensors are generally tensors encoding the values of the second dataset since these are the tensors retrieved in a search process based on the second dataset. Notwithstanding, tensors connected to the identified tensors and which may store or propagate the data to be removed may also be identified. These other tensors are also responsible for encoding tokens or embeddings of the data to be removed. Particularly, direct tensors, i.e., tensors storing embeddings or representations of specific tokens, and/or relational tensors, i.e., higher-order tensors storing relationships between specific tokens, may be identified and located for zeroing out encoded values therein or removal of the tensors altogether.

By zeroing out entries, the influence of the associated knowledge is removed from the AI system, thus effectively deleting therefrom. Encoding zero values may be conducted for removing tokens and/or relationships between tokens that encode their interactions. For instance, to remove the connection between "X-ray crystallography" and "proteins," you would zero out the parts of the tensor that link these two concepts.

Opting for zeroing values or removing tensors may be based on the relevance of the affected tensor(s) within the AI system. If the affected tensor(s) has little or no value after removing the data as established in the second dataset, or the tensor(s) is rarely used, the tensor(s) may be removed from the tensor network. Conversely, if the tensor(s) includes other data values of use for the AI system, encoding zero values is generally preferred.

In some embodiments, the step of running of the instruction on the trained AI system comprises, when the instruction at least comprises removing the second dataset and after the step of setting to zero values or removing the one or more tensors, applying tensor contraction to the trained AI system for establishing relationships between encoded data values across the trained AI system.

Tensor contraction may further reduce the influence of removed data on the outputs provided by the AI system. The present method enables localized removal of specific data, which effectively reduces the impact of the removed data on the outputs, and even if existing relationships may also be modified to maintain the accuracy of the AI system, the relationships may have propagated during the training of the AI system. Accordingly, tensor contraction is convenient for reducing less identifiable relationships within the tensor network for the removed data.

The tensor contraction removes pathways that propagate removed data within the AI system, and/or reconfigures contraction rules to ensure that the knowledge deletion is fully propagated through the model.

In some embodiments, the step of running of the instruction on the trained AI system comprises, when the instruction at least comprises removing the second dataset and after the step of setting to zero values or removing the one or more tensors, applying a normalization or rescaling on encoded data values in tensors of the trained AI system for balancing encoded data values across the trained AI system.

Like with the addition of data, removal of data could generate unbalance in the AI system owing to gaps or inconsistencies in the understanding of the AI system. Techniques such as, e.g., L2 normalization, gradient-based scaling, or weight decay can be applied to redistribute the importance across the tensors of the AI system and, consequently, improve the accuracy thereof.

In some embodiments, the step of running of the instruction on the trained AI system comprises, when the instruction at least comprises removing the second dataset and after the step of setting to zero values or removing the one or more tensors, obtaining one or more outputs from the trained AI system based on one or more inputted input datasets, the inputted input datasets being associated with the data values of the second dataset; and assessing accuracy of the trained AI system for providing outputs associated with the data values of the second dataset based on the obtained one or more outputs.

Validation of the AI system is also possible after removal of data, in this way making sure that the data according to the second dataset has little or no influence on new outputs provided by the AI system. The inputted datasets may be directed at producing outputs that would depend on the removed data to maximize the quality of the assessment made.

In some embodiments, the AI system is a computational model, such as, for example, a large language model (LLM), a neural network (NN), a convolutional neural network (CNN), or a support vector machine (SVM). In some preferred embodiments, the AI system is an LLM.

In some embodiments, the instruction comprises both adding the first dataset in the AI system and removing the second dataset from the AI system.

The addition and removal of data may be performed for different types of data, which generally results in the identification of different tensors for addition and removal of data. When the first and second datasets are related, the addition and removal of data may be conducted such that data values of the first dataset at least partially take the place of the data values of the second dataset as encoded in tensors of the AI system, meaning that the instruction effectively results in a partial or a complete replacement of the data values of the second dataset with those of the first dataset.

In some embodiments, the method further comprises training the trained AI system with a training input dataset after the step of running of the instruction on the trained AI system.

Although the method of the present disclosure enables the addition and/or removal, including replacement, of data in an AI system with little impact on the accuracy of the training conducted on the AI system, training the AI system after the modifications is also possible for increasing the accuracy of the outputs provided.

In some embodiments, the method further comprises receiving the instruction.

The instruction may be received from an apparatus or system different from at least one apparatus or system conducting the processing of the instruction and/or the running of the instruction. The instruction may be manually inputted from the apparatus or system, e.g., manual input by a device that provides the instruction automatically and autonomously based on a change in state of another device, system or process, and/or based on availability of fresh measurements of at least one sensor, manual input by a user, etc.

In some embodiments, the method further comprises storing, in at least one storage module (e.g., at least one memory, at least one volatile memory, at least one hard disk drive, at least one server, at least one database, etc.) the trained AI system.

The storing of the trained AI system may be conducted prior to the step of processing the instruction and/or after the step of running the instruction.

In some embodiments, the method further comprises using the trained AI system after the step of running the instruction, by inputting an input query dataset and obtaining one or more outputs in response to the input query dataset.

A second aspect relates to an apparatus or system. The apparatus or system comprises means for carrying out a method as described in the first aspect.

The means are configured to, for example, process an instruction to modify a trained artificial intelligence, Al, system, the AI system being configured to provide at least one output based on an input dataset; and run the instruction on the trained AI system. The trained AI system, which may be stored in the means or be accessible by the means (e.g., through a wired or a wireless communications data link), has the form of a tensor network. The instruction, which may be stored or be accessible by the means, comprises adding a first dataset in the AI system and/or removing a second dataset from the AI system.

The means are configured to run the instruction on the trained AI system by: encoding data values of the first dataset in one or more tensors of the trained AI system associated with values of the first dataset when the instruction at least comprises adding the first dataset; and setting to zero values associated with data values or relationships of the second dataset in one or more tensors of the trained AI system associated with values of the second dataset or removing the one or more tensors associated with values of the second dataset from the AI system when the instruction at least comprises removing the second dataset.

The means may be, for example but without limitation, at least one processor and at least one memory module. The means may additionally or alternatively be a plurality of apparatuses, each apparatus having at least one processor; in such case, the at least one memory module may be shared by some or all apparatuses, and/or some apparatuses have at least one respective memory module.

In some embodiments, the apparatus or system comprises same or additional means for conducting steps according to embodiments of the first aspect.

In some embodiments, the apparatus or system comprises means (such as, e.g., a user interface, a user input device) for inputting the instruction and/or the first dataset and/or the second dataset.

In some embodiments, the apparatus or system comprises means (such as, e.g., a user interface, a user input device) for obtaining one or more outputs provided by the AI system, and/or for providing feedback on the running of the instruction on the AI system.

A third aspect relates to a computer program comprising instructions which, when the program is executed by at least one processing apparatus or system, cause the at least one processing apparatus or system to carry out a method as described in the first aspect.

A fourth aspect relates to a computer-readable non-transitory storage medium comprising instructions which, when executed by at least one processing apparatus or system, cause the at least one computing one processing apparatus or system to carry out a method as described in the first aspect.

A fifth aspect relates to a data carrier signal carrying a computer program as described in the fourth aspect.

### BRIEF DESCRIPTION OF THE DRAWINGS

To complete the description and in order to provide for a better understanding of the disclosure, a set of drawings is provided. Said drawings form an integral part of the description and illustrate embodiments of the disclosure, which should not be interpreted as restricting the scope of the disclosure, but just as examples of how the disclosure can be carried out. The drawings comprise the following figures:
Figure 1 shows an apparatus or system in accordance with embodiments.
Figure 2 shows a method in accordance with embodiments.
Figure 3 shows steps of a method in accordance with embodiments.
Figure 4 shows steps of a method in accordance with embodiments.

### DETAILED DESCRIPTION

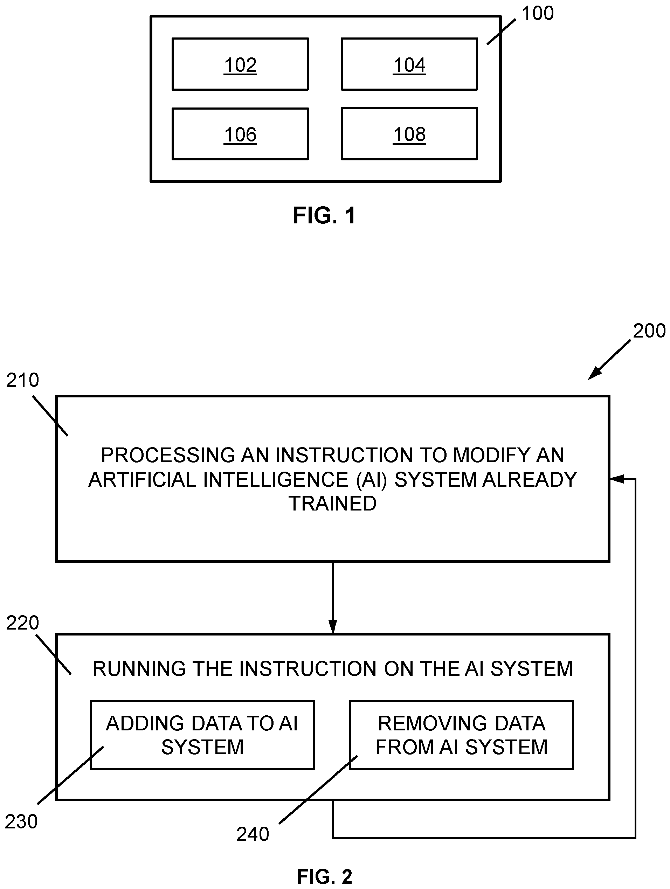

Figure 1 shows an apparatus or system 100 in accordance with embodiments.

The apparatus or system 100 includes one or more processors 102. The apparatus or system 100 also includes at least one memory module 104 for storage of data such as an AI system, an instruction, one or more sets of data associated with instructions, etc. Additionally, the at least one memory module 104 may store a computer program in the form of instructions that, upon running, perform a method according to the present disclosure.

The apparatus or system 100 may also include, in some embodiments, a communications module 106 configured to transmit data to and/or receive data from, in wired and/or wireless form, computing apparatuses or systems. For example, the apparatus or system 100 may transmit operating instructions to, e.g., a controller that configures and/or controls operation of a device or system, and/or receive data from the controller, etc.

In some embodiments, one or more processors 102 comprise or are part of at least one field-programmable gate array (i.e., FPGA), and the at least one FPGA stores instructions and/or runs a method according to the present disclosure. In some embodiments, the at least one FPGA is configured to run quantum-inspired tensor networks, which increases the processing speed at which the at least one FPGA may run the AI system and the associated method.

In some embodiments, such as in the embodiments shown in Figure 1, the apparatus or system 100 further includes means 108 for interaction with the apparatus or system 100 and/or for presenting data. Such means 108 serve as a point of contact between a user and the apparatus or system 100, allowing a user to input an instruction, including data to be added and/or removed, and/or receive feedback from the process of modifying the AI system.

Figure 2 shows, in a flowchart, a method 200 in accordance with embodiments.

The method 200 includes a step of processing 210 an instruction to modify an AI system, such as a predetermined AI system that is trained and has the form of a tensor network with a plurality of tensors.

The AI system is configured to provide at least one output based on an input dataset, learning from data to produce outputs such as making predictions or decisions. The AI system relates, in some examples, to one of the following processes, which are a non-exhaustive list of examples that fall within the scope of the present disclosure along with other processes that may function with an AI system as disclosed:

### 1. Manufacturing: Predictive Maintenance Optimization

The AI system may provide outputs in the form of predictive maintenance models based on real-time sensor data from machines (e.g., vibration, temperature) or outputs of such models (e.g., the AI system is such a model), preventing unexpected breakdowns and reducing downtime.

### 2. Energy Sector: Demand Prediction Adjustment

The AI system may provide outputs in the form of one or more energy demand forecasts, preferably in real time, and/or changes in operation of power sources (e.g., curtailment of wind turbines or photovoltaic panels, increasing production of wind turbines or photovoltaic panels, preparing battery cells for providing stored energy, etc.) by incorporating, in an input dataset, one or more of: weather changes, industrial consumption fluctuations, increase in energy generation by consumers, expected high or low demands of electric power (e.g., village partially empty during weekends, social events, etc.), etc. This would optimize energy flow and reduce reliance on non-renewable sources during peaks.

### 3. Healthcare: Personalized Medical Treatment

The AI system may provide outputs in the form of treatment plans based on how patients respond to therapies; measurements about the patients taken for establishing the health condition thereof may be part of an input dataset. For instance, if a cancer treatment works for a patient, the AI system could dynamically provide adjusted doses or explore new therapeutic approaches, improving clinical outcomes and personalizing care.

### 4. Transport and Logistics: Dynamic Route Optimization

The AI system can provide outputs in the form of transport routes in real-time based on traffic conditions, weather, geolocation data, and/or road restrictions, enhancing delivery times, cutting costs, and reducing carbon emissions, one or more thereof being part of an input dataset.

### 5. Agriculture: Resource Usage Optimization

The AI system can provide outputs in the form of irrigation and fertilization instructions or recommendations based on real-time soil and weather data, improving crop yields while minimizing water and fertilizer use.

### 6. Retail: Real-Time Pricing Optimization

The AI system can provide outputs in the form of adjusted pricing based on current demand, competition, and consumer behavior, helping retailers maximize profit margins, reduce inventory waste, and improve customer satisfaction.

### 7. Cybersecurity: Threat Detection Adaptation

The AI system can provide outputs in the form of threat detection models based on new vulnerabilities or cyber-attacks, improving response to emerging threats and offering better protection against security breaches.

In some embodiments, the method 200 comprises a step of using the obtained one or more outputs in a device or a system or a controller associated with a process. The device, system or controller is, for example, a device, system or controller associated with a process as those described above.

In some embodiments, an input dataset for use in the AI system comprises one or more measurements of at least one sensor and/or at least one computing apparatus associated with the process. By way of example, at least one computing apparatus controlling operation of a photovoltaic plant provides data indicative of the operation of multiple photovoltaic panels and at least one computing apparatus that provides data indicative of status of an electric grid such as generated power, consumed power, etc.

The method 200 also includes a step of running 220 the instruction on the trained AI system. The instruction may comprise adding 230 a dataset in the AI system. Additionally or alternatively, the instruction may comprise removing 240 a dataset from the AI system. The instruction includes the data to be added 230 in and/or removed 240 from the AI system.

Upon running 220 the instruction on the AI system, data values of the dataset to be added 230 are encoded in one or more tensors of the AI system which include values associated with values of the dataset to be added 230.

Additionally or alternatively, upon running 220 the instruction on the AI system, data values of the dataset to be removed 240 in tensors of the AI system are to be removed by setting to zero, in the tensors, the values or relationships of the dataset to be removed 240 and/or removing the tensors with values or relationships of the dataset to be removed 240.

The addition and/or removal of data of a dataset may be conducted, for example but without limitation, in accordance with at least one algorithm selected from, e.g., Parameterized Model Editing Tool (PMET), Model Editing via Memory Injection and Transformation (MEMIT), Rank-One Model Editing (ROME), Search, Edit, and Retain Algorithm for Consistency (SERAC), Knowledge Neurons (KN), etc., adapted to operate on tensors of a tensor network. Such algorithms may enable precise, parameterized edits to the AI system (e.g., LLM) by modifying specific parts of the internal knowledge of the AI system. The addition and/or removal thus allows localized updates, where new data and/or relationships can be introduced or invalid data and/or relationships can be removed with minimal disruption to the rest of the tensor network, thereby having fine-grained control over what knowledge is added and/or removed, ensuring efficiency and consistency. A combination of algorithms can be used to improve the accuracy of the addition and/or removal. For example: MEMIT excels at preserving the overall behavior of the AI system while allowing for real-time updates and deletions, making it effective for dynamic and evolving knowledge bases; ROME uses optimization techniques to adjust specific parts of the representations of the AI system in a highly controlled manner, allowing new pieces of data to be introduced or existing ones to be overwritten, and it does so effectively in large AI systems; SERAC searches for the target information within the AI system, making an edit by modifying the associated parameters, and then ensuring that the overall consistency of the AI system is retained as it does not introduce contradictions or errors in other parts of the AI systems, making it convenient for maintaining coherence across multiple knowledge domains and factual corrections in large AI systems; whereas KN and PMET allow updates at a granular level. The use of algorithms to this end may be, in some examples, as disclosed in European patent application no. EP23383011.6.

The addition and/or removal of data in the fashion described allows localized modifications of the tensor network that, in some embodiments, no retraining of the AI system is necessary after performing the modifications without impacting the accuracy of the AI system.

The addition and/or removal of data may be conducted every time new data is available or existing data is to be discarded from the AI system as illustrated with a lined arrow showing reiterating the processing 210 and the running 220 steps.

After the AI system has been modified by way of addition 230 and/or removal 240, the AI system may be used by inputting an input query dataset and obtaining one or more outputs in response to the input query dataset.

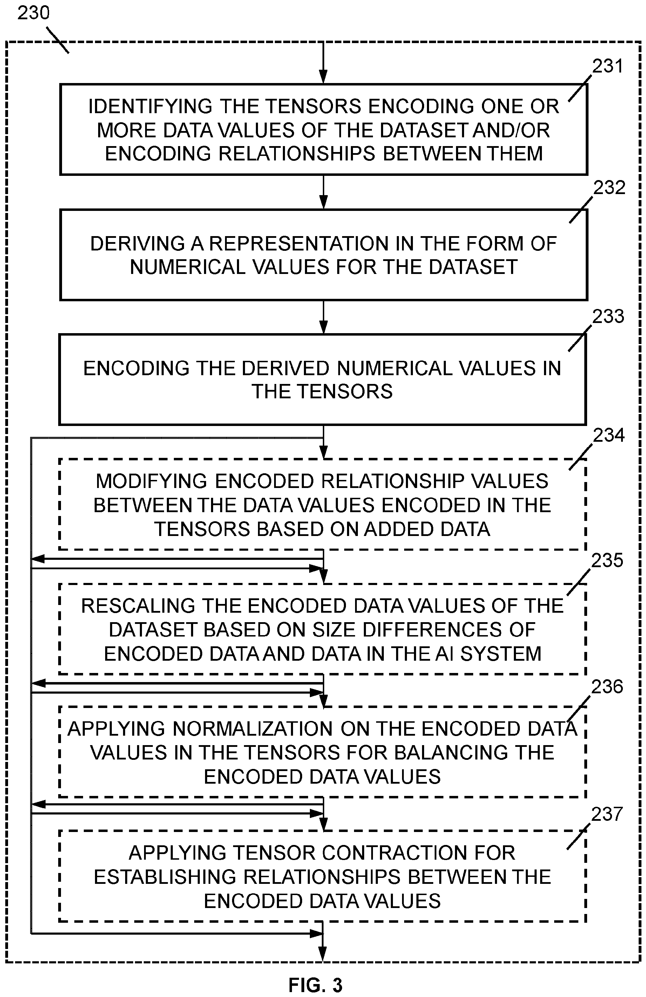

Figure 3 shows steps of a method in accordance with embodiments when adding 230 data in an AI system.

The adding 230 of data causes an encoding of the data values of the dataset to be added such that the method identifies 231 tensors in the AI system encoding one or more data values of said dataset and/or encoding one or more relationships between the one or more data values. The method derives 232 a representation in the form of numerical values for said dataset, that is to say, it converts the data value into numbers. The method encodes 233 the derived 232 numerical values in the identified 231 tensors.

As shown with dashed lines, in some embodiments, the encoding of the data values in the addition 230 also causes the method to perform one or more of the following:
- modifying 234, in the identified 231 tensors, encoded relationship values between the data values encoded 233 in the identified 231 tensors based on the data values of the dataset added 230; and/or
- rescaling 235 the encoded 233 data values of the dataset added 230 in the identified 231 tensors based on a size of the added data values, as encoded 233 in the identified 231 tensors, with respect to other data values already encoded in the identified 231 tensors and/or in other tensors; and/or
- applying 236 a normalization on the encoded 233 data values in the identified 231 tensors for balancing data values encoded in tensors of the AI system; and/or
- applying 237 tensor contraction to the AI system for establishing relationships between data values encoded in tensors of the AI system.

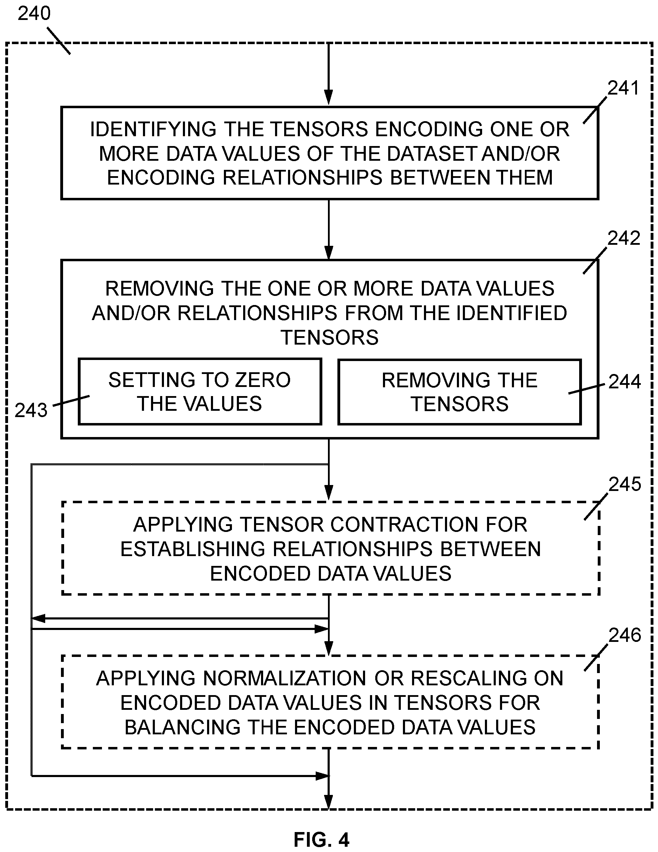

Figure 4 shows steps of a method in accordance with embodiments when removing 240 data from an AI system.

The removal 240 of data causes a removal of data values of the dataset to be removed such that the method identifies 241 tensors in the AI system encoding one or more data values of said dataset and/or encoding one or more relationships between the one or more data values. The method removes 242 the data values and/or relationships therebetween by setting 243 to zero the values associated with data values and/or relationships of said dataset in the identified 241 tensors, and/or by removing 244 the identified tensors.

As shown with dashed lines, in some embodiments, the removal 240 of the data also causes the method to perform one or more of the following:
- applying 245 tensor contraction to the AI system for establishing relationships between encoded data values across the trained AI system; and/or
- applying 246 a normalization and/or rescaling on encoded data values in tensors for balancing encoded data values across the AI system.

Although specific examples are described herein, it will be evident that various modifications and changes may be made to these examples without departing from the broader spirit and scope of the disclosure. Accordingly, the specification and drawings are to be regarded in an illustrative rather than a restrictive sense. The accompanying drawings that form a part hereof show by way of illustration, and not of limitation, specific examples in which the subject matter may be practiced. The examples illustrated are described in sufficient detail to enable those skilled in the art to practice the teachings disclosed herein. Other examples may be utilized and derived therefrom, such that structural and logical substitutions and changes may be made without departing from the scope of this disclosure. This detailed description, therefore, is not to be taken in a limiting sense, and the scope of various examples is defined only by the appended claims, along with the full range of equivalents to which such claims are entitled.

Such examples of the inventive subject matter may be referred to herein, individually or collectively, by the terms "embodiment" or "example" merely for convenience and without intending to voluntarily limit the scope of this application to any single example or concept if more than one is in fact disclosed. Thus, although specific examples have been illustrated and described herein, it should be appreciated that any arrangement calculated to achieve the same purpose may be substituted for the specific examples shown. This disclosure is intended to cover any and all adaptations or variations of various examples. Combinations of the above examples, and other examples not specifically described herein, will be apparent to those of skill in the art upon reviewing the above description.

Some portions of the subject matter discussed herein may be presented in terms of algorithms or symbolic representations of operations on data stored as bits or binary digital signals within a machine memory (e.g., a computer memory). Such algorithms or symbolic representations are examples of techniques used by those of ordinary skill in the data processing arts to convey the substance of their work to others skilled in the art. As used herein, an "algorithm" is a self-consistent sequence of operations or similar processing leading to a desired result. In this context, algorithms and operations involve physical manipulation of physical quantities. Typically, but not necessarily, such quantities may take the form of electrical, magnetic, or optical signals capable of being stored, accessed, transferred, combined, compared, or otherwise manipulated by a machine. It is convenient at times, principally for reasons of common usage, to refer to such signals using words such as "data," "content," "bits," "values," "elements," "symbols," "characters," "terms," "numbers," "numerals," or the like. These words, however, are merely convenient labels and are to be associated with appropriate physical quantities.

Unless specifically stated otherwise, discussions herein using words such as "processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (e.g., volatile memory, non-volatile memory, or any suitable combination thereof), registers, or other machine components that receive, store, transmit, or display information. Furthermore, unless specifically stated otherwise, the terms "a" and "an" are herein used, as is common in patent documents, to include one or more than one instance. As used herein, the conjunction "or" refers to a non-exclusive "or," unless specifically stated otherwise.

Where the context permits, words using the singular or plural number may also include the plural or singular number, respectively. The word "or" in reference to a list of two or more items, covers all of the following interpretations of the word: any one of the items in the list, all of the items in the list, and any combination of the items in the list.

Although some examples may include a particular sequence of operations, the sequence may in some cases be altered without departing from the scope of the present disclosure. For example, some of the operations depicted may be performed in parallel or in a different sequence that does not materially affect the functions as described in the examples. In other examples, different components of an example device or system that implements an example method may perform functions at substantially the same time or in a specific sequence.

As used herein, the term "processing apparatus" may refer to any one or more circuits or virtual circuits (e.g., a physical circuit emulated by logic executing on an actual processor) that manipulates data values according to control signals (e.g., commands, opcodes, machine code, control words, macroinstructions, etc.) and which produces corresponding output signals that are applied to operate a machine. A processor may, for example, include at least one of a Central Processing Unit (CPU), a Reduced Instruction Set Computing (RISC) Processor, a Complex Instruction Set Computing (CISC) Processor, a Graphics Processing Unit (GPU), a Digital Signal Processor (DSP), a Tensor Processing Unit (TPU), a Neural Processing Unit (NPU), a Vision Processing Unit (VPU), a Machine Learning Accelerator, an Artificial Intelligence Accelerator, an Application Specific Integrated Circuit (ASIC), a Field Programmable Gate Array (FPGA), a Radio-Frequency Integrated Circuit (RFIC), a Neuromorphic Processor, a Quantum Processor, or any combination thereof. A processor may be a multi-core processor having two or more independent processors (sometimes referred to as "cores") that may execute instructions contemporaneously. Multi-core processors may contain multiple computational cores on a single integrated circuit die, each of which can independently execute program instructions in parallel. Parallel processing on multi-core processors may be implemented via architectures like superscalar, VLIW, vector processing, or SIMD that allow each core to run separate instruction streams concurrently. A processor may be emulated in software, running on a physical processor, as a virtual processor or virtual circuit. The virtual processor may behave like an independent processor but is implemented in software rather than hardware.

The various operations of example methods described herein may be performed, at least partially, by one or more processing apparatuses that are temporarily configured (e.g., by software) or permanently configured to perform the relevant operations. Whether temporarily or permanently configured, such processors may constitute processor-implemented modules/components that operate to perform one or more operations or functions. The modules/components referred to herein may, in some examples, comprise processor-implemented modules/components.

Similarly, the methods described herein may be at least partially processor-implemented. For example, at least some of the operations of a method may be performed by one or more processors or processor-implemented modules/components. The performance of certain of the operations may be distributed among the one or more processors, not only residing within a single machine, but deployed across a number of machines. In some examples, the processor or processors may be located in a single location (e.g., within a home environment, an office environment, or a server farm), while in other examples the processors may be distributed across a number of locations.

Examples may be implemented in digital electronic circuitry, or in computer hardware, firmware, or software, or in combinations of them. Examples may be implemented using a computer program product, e.g., a computer program tangibly embodied in an information carrier, e.g., in a machine-readable medium for execution by, or to control the operation of, data processing apparatus, e.g., a programmable processor, a computer, or multiple computers.

A computer program can be written in any form of programming language, including compiled or interpreted languages, and it can be deployed in any form, including as a standalone program or as a module, subroutine, or other unit suitable for use in a computing environment. A computer program can be deployed to be executed on one computer or on multiple computers at one site or distributed across multiple sites and interconnected by a communication network.

In this text, the term "includes", "comprises" and derivations thereof (such as "including", "comprising", etc.) should not be understood in an excluding sense, that is, these terms should not be interpreted as excluding the possibility that what is described and defined may include further elements, steps, etc.

On the other hand, the disclosure is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A method (200) comprising:
processing (210) an instruction to modify a trained artificial intelligence, Al, system, the AI system being configured to provide at least one output based on an input dataset; and
running (220) the instruction on the trained AI system;
**characterized in that:**
the trained AI system has the form of a tensor network;
the instruction comprises: adding (230) a first dataset in the AI system and/or removing (240) a second dataset from the AI system; and
running the instruction on the trained AI system comprises:
when the instruction at least comprises adding (230) the first dataset, encoding data values of the first dataset in one or more tensors of the trained AI system associated with values of the first dataset; and
when the instruction at least comprises removing (240) the second dataset, setting to zero values associated with data values or relationships of the second dataset in one or more tensors of the trained AI system associated with values of the second dataset, or removing the one or more tensors associated with values of the second dataset from the AI system.

2. The method (200) of claim 1, wherein:
the encoding of the data values of the first dataset comprises:
identifying (231) tensors in the AI system encoding one or more data values of the first dataset and/or encoding one or more relationships between the one or more data values;
deriving (232) a representation in the form of numerical values for the first dataset; and
encoding (233) the derived numerical values in the identified tensors; and the setting to zero values or removing the one or more tensors comprises:
identifying (241) tensors in the AI system encoding one or more data values of the second dataset and/or encoding one or more relationships between the one or more data values; and
setting (243) to zero values associated with the data values or relationships of the second dataset in the identified tensors, or removing (244) the identified tensors from the AI system.

3. The method (200) of any one of the preceding claims, wherein the running of the instruction on the trained AI system comprises, when the instruction at least comprises adding (230) the first dataset and after the encoding of the data values:
modifying (234), in one or more tensors in the trained AI system, encoded relationship values between the data values encoded in the one or more tensors based on the data values of the first dataset added in the trained AI system.

4. The method (200) of any one of the preceding claims, wherein the running of the instruction on the trained AI system comprises, when the instruction at least comprises adding (230) the first dataset and after the encoding of the data values:
comparing a size of the encoded data values of the first dataset in the one or more tensors with a size of data values encoded in tensors of the trained AI system not encoded in the encoding step, and rescaling (235) the encoded data values of the first dataset in the one or more tensors when the comparison of sizes exceeds a predetermined size threshold; and/or
applying (236) a normalization on encoded data values in tensors of the trained AI system for balancing encoded data values across the trained AI system.

5. The method (200) of any one of the preceding claims, wherein the running of the instruction on the trained AI system comprises, when the instruction at least comprises adding (230) the first dataset and after the encoding of the data values:
applying (237) tensor contraction to the trained AI system for establishing relationships between encoded data values across the trained AI system.

6. The method (200) of any one of the preceding claims, wherein the running of the instruction on the trained AI system comprises, when the instruction at least comprises adding (230) the first dataset and after the encoding of the data values:
obtaining one or more outputs from the trained AI system based on one or more inputted input datasets, the inputted input datasets being associated with the data values of the first dataset; and
assessing accuracy of the trained AI system for providing outputs associated with the data values of the first dataset based on the obtained one or more outputs.

7. The method (200) of any one of the preceding claims, wherein the running of the instruction on the trained AI system comprises, when the instruction at least comprises removing (240) the second dataset and after the setting to zero values or removing the one or more tensors:
applying (245) tensor contraction to the trained AI system for establishing relationships between encoded data values across the trained AI system.

8. The method (200) of any one of the preceding claims, wherein the running of the instruction on the trained AI system comprises, when the instruction at least comprises removing (240) the second dataset and after the setting to zero values or removing the one or more tensors:
applying (246) a normalization or rescaling on encoded data values in tensors of the trained AI system for balancing encoded data values across the trained AI system.

9. The method (200) of any one of the preceding claims, wherein the running of the instruction on the trained AI system comprises, when the instruction at least comprises removing (240) the second dataset and after the setting to zero values or removing the one or more tensors:
obtaining one or more outputs from the trained AI system based on one or more inputted input datasets, the inputted input datasets being associated with the data values of the second dataset; and
assessing accuracy of the trained AI system for providing outputs associated with the data values of the second dataset based on the obtained one or more outputs.

10. The method (200) of any one of the preceding claims, wherein the AI system is a large language model.

11. The method (200) of any one of the preceding claims, wherein the instruction comprises both adding the first dataset in the AI system and removing the second dataset from the AI system.

12. The method (200) of any one of the preceding claims, further comprising, after the running (220) of the instruction on the trained AI system, training the trained AI system with a training input dataset.

13. An apparatus or system (100) comprising means for carrying out a method of any one of the preceding claims.

14. An apparatus or system (100) comprising at least one processor (102) and at least one memory module (104), the at least one processor and the at least one memory module being configured to:
process (210) an instruction to modify a trained artificial intelligence, Al, system, the AI system being configured to provide at least one output based on an input dataset; and
run (220) the instruction on the trained AI system;
**characterized in that:**
the trained AI system has the form of a tensor network;
the instruction comprises: adding (230) a first dataset in the AI system and/or removing (240) a second dataset from the AI system; and
the at least one processor (102) and the at least one memory module (104) are configured to run the instruction on the trained AI system by:
encoding data values of the first dataset in one or more tensors of the trained AI system associated with values of the first dataset when the instruction at least comprises adding (230) the first dataset; and
setting to zero values associated with data values or relationships of the second dataset in one or more tensors of the trained AI system associated with values of the second dataset or removing the one or more tensors associated with values of the second dataset from the AI system when the instruction at least comprises removing (240) the second dataset.

15. A computer program comprising instructions which, when the program is executed by at least one computing apparatus or system (100) with at least one processor (102), cause the at least one computing apparatus or system (100) to carry out the steps of a method (200) according to any one of claims 1-12.
